# EUROPEAN PATENT APPLICATION

(11) **EP 4 596 758 A1**
(43) Date of publication of application: **06.08.2025**
(21) Application number: 25154812.9
(22) Date of filing: 29.01.2025
(51) Int. Cl.: C25B 1/042, C25B 15/02, C25B 15/08

(54) **WATER ELECTROLYSIS DEVICE**

(30) Priority: 01.02.2024 JP 2024014285
(71) Applicant: Aisin Corporation, Aichi 448-8650 (JP)
(72) Inventor: KATO, Yoshiki, KARIYA, AICHI, 448-8650 (JP); OGURI, Nobuaki, KARIYA, AICHI, 448-8650 (JP)
(74) Representative: Cabinet Beau de Loménie

(57) **Abstract**

A water electrolysis device (1) includes a water electrolysis module (2) that generates hydrogen by water vapor electrolysis. The water electrolysis device includes: a blower (7, 8) configured to supply hydrogen to the water electrolysis module; a recycle passage configured to supply generated hydrogen generated by the water electrolysis module from the water electrolysis module to an intake port of the blower; a condenser (6) configured to condense water vapor contained in the generated hydrogen; and a temperature increasing portion (18) configured to increase a temperature of the generated hydrogen between the condenser and the blower.

## Description

This disclosure relates to a water electrolysis device including a water electrolysis module that produces hydrogen by water vapor electrolysis.

### BACKGROUND DISCUSSION

In the related art, a water electrolysis device is known in which hydrogen generated at a fuel electrode of a water electrolysis cell is mixed with water vapor supplied to the fuel electrode and recirculated to the water electrolysis cell (see, for example, JP 2018-517233A (Reference 1)). In the water electrolysis device, a fuel electrode off gas cooled by a cooler is supplied to a phase separator, and the gas passing through the phase separator is pressurized by a blower and then mixed with water vapor.

However, in the water electrolysis device in the related art, a gas containing saturated water vapor in addition to hydrogen may be supplied from the phase separator to the blower, and the water vapor may be condensed in the blower to cause performance degradation or deterioration of the blower.

A need thus exists for a water electrolysis device capable of satisfactorily reducing performance degradation and deterioration of a blower for recirculating hydrogen generated in a water electrolysis module to the water electrolysis module.

### SUMMARY

According to an aspect of this disclosure, provided is a water electrolysis device including a water electrolysis module that generates hydrogen by water vapor electrolysis. The water electrolysis device includes: a blower configured to supply hydrogen to the water electrolysis module; a recycle passage configured to supply generated hydrogen generated by the water electrolysis module from the water electrolysis module to an intake port of the blower; a condenser configured to condense water vapor contained in the generated hydrogen; and a temperature increasing portion configured to increase a temperature of the generated hydrogen between the condenser and the blower.

In the water electrolysis device according to this disclosure, generated hydrogen generated in the water electrolysis module is supplied from the water electrolysis module to the intake port of the blower via the recycle passage. The water vapor contained in the generated hydrogen is condensed in the condenser. Further, the generated hydrogen that passes through the condenser is increased in temperature by the temperature increasing portion between the condenser and the blower. Further, the generated hydrogen, whose temperature is increased by the temperature increasing portion, is supplied to the water electrolysis module by the blower. Accordingly, by preventing the generated hydrogen at a temperature equal to or lower than a dew-point temperature from being supplied from the recycle passage to the blower, it is possible to prevent condensation of water vapor in the recycle passage and the blower. As a result, it is possible to satisfactorily reduce performance degradation and deterioration of the blower for recirculating hydrogen generated in the water electrolysis module to the water electrolysis module. The blower may supply hydrogen for oxidation prevention to the fuel electrode of the water electrolysis cell. The blower may supply hydrogen for combustion to a combustor included in the water electrolysis module. Further, the water electrolysis module may include a reversible operation type water electrolysis cell that generates electric power by an electrochemical reaction between hydrogen supplied to the fuel electrode and oxygen supplied to an oxidant electrode.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic configuration diagram showing a water electrolysis device according to this disclosure; and
FIG. 2 is a system diagram showing the water electrolysis device according to this disclosure.

### DETAILED DESCRIPTION

Hereinafter, an embodiment of this disclosure will be described with reference to the drawings.

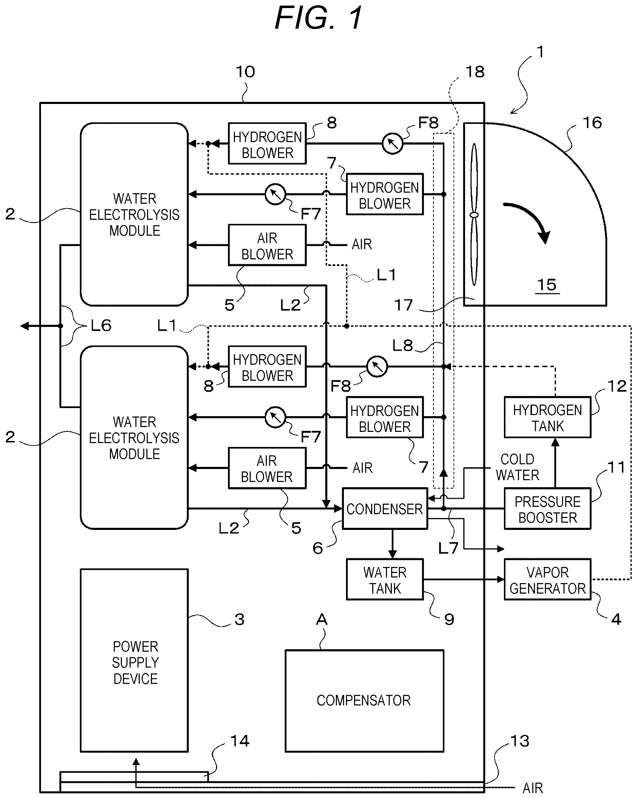

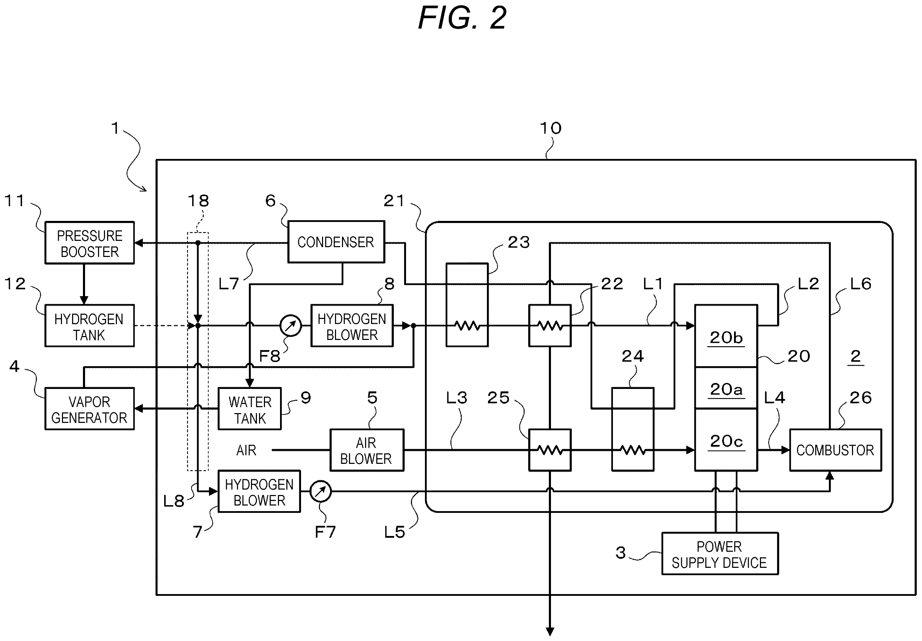

FIG. 1 is a schematic configuration diagram showing a water electrolysis device 1 according to this disclosure, and FIG. 2 is a system diagram showing the water electrolysis device 1. The water electrolysis device 1 shown in the drawings includes a plurality of (two in the present embodiment) water electrolysis modules 2, a power supply device 3, a vapor generator 4, a plurality of (two in the present embodiment) air blowers 5, a condenser 6, a plurality of (two in the present embodiment) hydrogen blowers 7 for combustion, a plurality of (two in the present embodiment) hydrogen blowers 8 for oxidation prevention, a water tank 9, and a housing 10 accommodating components thereof. For ease of description, only one of the two water electrolysis modules 2 is shown in FIG. 2.

As shown in FIG. 1, the water electrolysis modules 2 are arranged side by side in a vertical direction or a horizontal direction in an upper portion of the housing 10. Each water electrolysis module 2 includes a water electrolysis cell stack 20 that generates hydrogen by water vapor electrolysis. The water electrolysis cell stack 20 includes a plurality of solid oxide electrolytic cells (SOECs, hereinafter, referred to as "single cells") stacked in a predetermined direction. Each single cell includes an electrolyte 20a, a fuel electrode 20b disposed on one surface side of the electrolyte 20a, and an oxidant electrode 20c disposed on the other surface side of the electrolyte 20a.

The electrolyte 20a is a solid electrolyte such as stabilized zirconia (for example, YSZ). The fuel electrode 20b is formed of a composite material of a catalytic metal such as Ni and stabilized zirconia. The oxidant electrode 20c is formed of ceramics such as LSCF. Each single cell electrolyzes water vapor in a high-temperature environment of, for example, 650°C to 800°C in response to application of electric power (DC power) from the power supply device 3, and generates hydrogen at the fuel electrode 20b and oxygen at the oxidant electrode 20c. Further, in the present embodiment, the single cell of the water electrolysis cell stack 20 is a reversible operation type water electrolysis cell that generates hydrogen and oxygen by water vapor electrolysis, generates electric power by an electrochemical reaction between hydrogen and oxygen, and transmits the electric power to a system power supply or the like.

Each water electrolysis module 2 includes various pipes, a plurality of heat exchangers, and the like in addition to the water electrolysis cell stack 20, and these components of the water electrolysis module 2 are accommodated in a module case 21 formed by wrapping a heat insulating material around housing parts. As shown in FIG. 2, a fuel supply pipe L1 forming a fuel supply passage is connected to a fuel electrode inlet of the water electrolysis cell stack 20 of each water electrolysis module 2. The fuel supply pipe L1 of each water electrolysis module 2 is connected to the vapor generator 4 disposed outside the housing 10 of the water electrolysis device 1 via heat exchangers 22 and 23 in the module case 21.

In addition, a hydrogen flow pipe L2 is connected to a fuel electrode outlet of the water electrolysis cell stack 20 of each water electrolysis module 2, and hydrogen (generated hydrogen) generated at the fuel electrode 20b of each single cell and the fuel electrode off gas containing water vapor flow into the hydrogen flow pipe L2. The hydrogen flow pipe L2 extending from each water electrolysis cell stack 20 is connected to the condenser 6 outside the module case 21 via a heat exchanger 24 and the heat exchanger 23 in the module case 21. That is, the fuel electrode off gas is supplied as a heating medium (a heat source) to the heat exchangers 23, 24 via the hydrogen flow pipe L2, and the fuel electrode off gas that passes through the heat exchangers 23, 24 of each water electrolysis module 2 is supplied to the condenser 6 via the hydrogen flow pipe L2.

Further, an air supply pipe L3 forming an air supply passage is connected to an oxidant electrode inlet of the water electrolysis cell stack 20 of each water electrolysis module 2. The air supply pipe L3 from each water electrolysis cell stack 20 is connected to the air blower 5 outside the module case 21 via the heat exchanger 24 and a heat exchanger 25 inside the module case 21. In addition, an oxidant electrode outlet of the water electrolysis cell stack 20 of each water electrolysis module 2 is connected to a combustor 26 via an oxidant electrode off gas pipe L4 forming an oxidant electrode off gas passage. An oxidant electrode off gas containing oxygen from the oxidant electrode 20c of each single cell flows into the combustor 26 in the module case 21 via the oxidant electrode off gas pipe L4.

The combustor 26 of each water electrolysis module 2 includes an ignition device (not shown), and combusts a mixed gas of the oxidant electrode off gas from the oxidant electrode off gas pipe L4 and hydrogen supplied from the corresponding hydrogen blower 7 outside the module case 21 via a hydrogen supply pipe (a hydrogen supply passage) L5. A combustion exhaust gas generated by the combustion of the mixed gas in the combustor 26 is supplied as a heating medium to the heat exchangers 22 and 25 via an exhaust gas pipe (an exhaust gas passage) L6. An exhaust gas that passes through the heat exchangers 22 and 25 is discharged to the outside of the housing 10 of the water electrolysis device 1 via the exhaust gas pipe L6. A flow meter F7 for measuring a flow rate of hydrogen delivered from the hydrogen blower 7 is installed in the hydrogen supply pipe L5.

The power supply device 3 may be supplied with power from at least one of a system power supply, a renewable energy power generation facility, and the like, may be a storage battery, or may be a combination thereof. The power supply device 3 is disposed in a lower portion of the housing 10 to be positioned below each water electrolysis module 2 together with a compensator A including a control device and the like (see FIG. 1).

The vapor generator 4 vaporizes raw material water using a heat pump (not shown) or the like, and supplies the obtained water vapor to the fuel supply pipe L1 of each water electrolysis module 2. The water vapor from the vapor generator 4 is heated by heat exchange with the combustion exhaust gas in the heat exchanger 23 in the module case 21 of each water electrolysis module 2, and is then heated to a required temperature by heat exchange with the fuel electrode off gas in the heat exchanger 22. The heated water vapor is supplied to the fuel electrode 20b of each single cell via the fuel supply pipe L1 and the fuel electrode inlet of the water electrolysis cell stack 20.

The air blower 5 is installed inside the housing 10 of the water electrolysis device 1, above the power supply device 3 and the compensator A, and outside the module case 21 of each water electrolysis module 2 (see FIG. 1). The air blower 5 takes in air from within the housing 10 of the water electrolysis device 1 via an air filter (not shown) and dispenses the air. The air from the air blower 5 is heated by heat exchange with the combustion exhaust gas in the heat exchanger 25 in the module case 21 of each water electrolysis module 2, and then heated to a required temperature by heat exchange with the fuel electrode off gas in the heat exchanger 24, and supplied to the oxidant electrode 20c of each single cell via the air supply pipe L3 and the oxidant electrode inlet of the water electrolysis cell stack 20. Accordingly, oxygen generated in the oxidant electrode 20c of each single cell can be discharged to the oxidant electrode off gas pipe L4 together with the air from the air blower 5, that is, a sweep gas.

The condenser 6 is installed inside the housing 10 of the water electrolysis device 1, above the power supply device 3 and the compensator A, and outside the module case 21 of each water electrolysis module 2 (see FIG. 1). The condenser 6 cools the fuel electrode off gas from the hydrogen flow pipe L2 with cold water supplied from outside the housing 10 of the water electrolysis device 1, and condenses water vapor contained in the fuel electrode off gas (generated hydrogen). Condensed water generated in the condenser 6 is collected (stored) in the water tank 9 in the housing 10, and the condensed water in the water tank 9 is used as raw material water for water vapor in the vapor generator 4. Further, the fuel electrode off gas, that is, hydrogen, that is obtained by gas-liquid separation in the condenser 6, flows into a pressure booster 11, such as a diaphragm type, a piston type, or a centrifugal type, via a hydrogen flow pipe (a hydrogen passage) L7, and is pressure-fed into a hydrogen tank 12 by the pressure booster 11. Accordingly, hydrogen generated by each of the water electrolysis modules 2 is stored in the hydrogen tank 12. As shown in FIGS. 1 and 2, the pressure booster 11 and the hydrogen tank 12 are installed outside the housing 10 of the water electrolysis device 1.

Further, a recycle pipe L8 forming a recycle passage branches off from the hydrogen flow pipe L7, and intake ports of the hydrogen blowers 7, 8 that are connected to the recycle pipe L8. Accordingly, each hydrogen blower 7 takes in a part of the fuel electrode off gas, that is, hydrogen, that is obtained by gas-liquid separation in the condenser 6, via the recycle pipe L8, and supplies hydrogen to the combustor 26 of the corresponding water electrolysis module 2 via the hydrogen supply pipe L5. Each hydrogen blower 8 takes in a part of the fuel electrode off gas, that is, hydrogen (generated hydrogen), that is obtained by gas-liquid separation in the condenser 6, via the recycle pipe L8, and dispenses hydrogen into the corresponding fuel supply pipe L1 outside the module case 21 of each water electrolysis module 2. That is, each hydrogen blower 8 mixes hydrogen from the condenser 6 as an antioxidant with the water vapor supplied from the vapor generator 4 to each fuel supply pipe L1. Accordingly, it is possible to maintain the fuel electrode 20b of each single cell of each water electrolysis cell stack 20 in a reducing atmosphere, thereby satisfactorily reducing oxidation of a catalytic metal.

Both hydrogen blowers 7, 8 are installed inside the housing 10 of the water electrolysis device 1, above the power supply device 3 and the compensator A, and outside the module case 21 of each water electrolysis module 2 (see FIG. 1). Further, a flow meter F8 for measuring the flow rate of hydrogen taken in by each hydrogen blower 8 is installed upstream of the intake port of the hydrogen blower 8. In addition, the recycle pipe L8 communicates with the hydrogen tank 12 outside the housing 10 via a pipe. Accordingly, when each water electrolysis cell stack 20 is activated or each water electrolysis cell stack 20 is operated as a fuel cell, hydrogen stored in the hydrogen tank 12 can be supplied by each hydrogen blower 8 via the fuel supply pipe L1 to the fuel electrode inlet of the water electrolysis cell stack 20 of each water electrolysis module 2.

The housing 10 of the water electrolysis device 1 is formed of a metal or the like, and an air intake port 13 for ventilating the inside is formed in a lower portion of the housing 10. The air intake port 13 communicates with the inside of the housing 10 via an air filter 14 installed on an inner bottom surface of the housing 10. An exhaust duct 16 that defines an exhaust port 15 is fixed to an upper portion of a side wall portion of the housing 10. An electric ventilation fan 17 is installed at an air inlet port of the exhaust duct 16.

Accordingly, when the ventilation fan 17 is operated while the water electrolysis device 1 is in operation, outside air flows into the housing 10 via the air intake port 13 and the air filter 14. The air that flows into the housing 10 absorbs heat emitted from the water electrolysis modules 2, the power supply device 3, the compensator A, the air blowers 5, the condenser 6, the hydrogen blowers 7, 8, the fuel supply pipe L1, the hydrogen flow pipe L2, the exhaust gas pipe L6, and the like inside the housing 10, and increases in temperature. Further, the air increasing in temperature in the housing 10 is drawn into the exhaust duct 16 by the ventilation fan 17 and discharged to the outside via the exhaust port 15.

During an operation of the water electrolysis device 1, the temperature around the ventilation fan 17 in the housing 10 is sufficiently higher (for example, about 50°C to 55°C) than the temperature of the fuel electrode off gas, that is, hydrogen, at a fuel electrode off gas outlet of the condenser 6 (a dew-point temperature, for example, about 30°C to 40°C). Based on this, in the water electrolysis device 1, a part of the hydrogen flow pipe L7 forming the recycle passage and a part of the recycle pipe L8 located between the hydrogen flow pipe L7 and each of the hydrogen blowers 7 and each of the flow meters F8 are disposed within the housing 10 to face the air inlet port of the ventilation fan 17 (the exhaust duct 16). That is, a part of the hydrogen flow pipe L7 and a part of the recycle pipe L8 form a temperature increasing portion 18 that increases the temperature of the fuel electrode off gas, that is, hydrogen, between the condenser 6 and each of the hydrogen blowers 7 and each of the flow meters F8. As can be seen from FIG. 1, the temperature increasing portion 18 is closer to the exhaust port 15 than the air intake port 13 of the housing 10.

As described above, the water electrolysis device 1 includes the water electrolysis module 2 including the water electrolysis cell stack 20, the hydrogen blowers 7, 8, the hydrogen flow pipes L2, L7, the recycle pipe L8, the condenser 6, and the temperature increasing portion 18. The water electrolysis cell stack 20 includes a plurality of single cells that generate hydrogen at the fuel electrode 20b and generate oxygen at the oxidant electrode 20c by water vapor electrolysis. The hydrogen blower 7 supplies hydrogen for combustion to the combustor 26 of the water electrolysis module 2, and the hydrogen blower 8 supplies hydrogen for oxidation prevention to the fuel electrode 20b of each single cell of the water electrolysis cell stack 20. Further, the hydrogen flow pipes L2, L7 and the recycle pipe L8 form a recycle passage that supplies the fuel electrode off gas containing hydrogen (generated hydrogen) from the fuel electrode 20b of each single cell of the water electrolysis cell stack 20 to the intake port of the hydrogen blower 8. The condenser 6 condenses water vapor contained in the fuel electrode off gas flowing through the hydrogen flow pipe L2 and the like. Further, the temperature increasing portion 18 increases the temperature of the fuel electrode off gas (generated hydrogen) between the condenser 6 and the hydrogen blowers 7, 8 and the flow meters F7, F8.

That is, in the water electrolysis device 1, during the operation of the water electrolysis module 2, the fuel electrode off gas containing hydrogen is supplied from the fuel electrode 20b of each single cell of the water electrolysis cell stack 20 to the hydrogen blower 7 (the intake port), the flow meter F7, the flow meter F8, and the hydrogen blower 8 (the intake port) via the hydrogen flow pipes L2, L7 and the recycle pipe L8. The water vapor contained in the fuel electrode off gas flowing through the hydrogen flow pipe L2 is condensed by the condenser 6, and the fuel electrode off gas (generated hydrogen) passing through the condenser 6 is further increased in temperature by the temperature increasing portion 18 between the condenser 6 and the flow meter F8 and the hydrogen blower 8. Further, hydrogen increased in temperature by the temperature increasing portion 18 is supplied by the hydrogen blower 7 to the combustor 26 of the water electrolysis module 2 as hydrogen for combustion, and is supplied by the hydrogen blower 8 to the fuel electrode 20b of each single cell of the water electrolysis cell stack 20 as hydrogen for oxidation prevention.

Accordingly, the fuel electrode off gas (generated hydrogen) having a temperature equal to or lower than the dew-point temperature is prevented from being supplied from the recycle pipe L8 to the hydrogen blower 7 and the flow meter F7, so that it is possible to prevent condensation of water vapor in the recycle pipe L8, the hydrogen blower 7, and the flow meter F7. By preventing the fuel electrode off gas (generated hydrogen) having a temperature equal to or lower than the dew-point temperature from being supplied from the recycle pipe L8 to the flow meter F8 and the hydrogen blower 8, it is possible to prevent condensation of water vapor in the flow meter F8 and the hydrogen blower 8. As a result, in the water electrolysis device 1, it is possible to satisfactorily reduce performance degradation and deterioration of the hydrogen blowers 7, 8 and the flow meters F7, F8 that recirculate hydrogen generated in the water electrolysis module 2, that is, the fuel electrode 20b of each single cell of the water electrolysis cell stack 20 to the water electrolysis cell stack 20 or the combustor 26 of the water electrolysis module 2.

In addition, the water electrolysis device 1 includes the housing 10 which accommodates the water electrolysis module 2 (the water electrolysis cell stack 20), the hydrogen blowers 7, 8, the hydrogen flow pipes L2, L7, the recycle pipe L8, the condenser 6, and the like, and the temperature increasing portion 18 is formed by a part of the hydrogen flow pipe L7 and a part of the recycle pipe L8 which are disposed in a region around the ventilation fan 17 in the housing 10 whose temperature is higher than the dew-point temperature of the fuel electrode off gas (generated hydrogen) at an outlet of the condenser 6. Accordingly, the temperature of the fuel electrode off gas (generated hydrogen) supplied from the condenser 6 to the hydrogen blowers 7, 8 and the like can be increased by effectively utilizing the heat released inside of the housing 10 when the water vapor electrolysis is performed in the water electrolysis cell stack 20. As a result, there is no need to install a heater or the like, and it is possible to satisfactorily prevent an increase in cost, an increase in power consumption, and the like of the water electrolysis device 1.

Further, the housing 10 of the water electrolysis device 1 includes the air intake port 13 for taking air to the inside and the exhaust duct 16 forming the exhaust port 15 for discharging the air from the inside to the outside, and the temperature increasing portion 18 is disposed inside the housing 10 to be closer to the exhaust port 15 than the air intake port 13. Accordingly, the fuel electrode off gas (generated hydrogen) supplied from the condenser 6 to the hydrogen blowers 7, 8 and the like can be satisfactorily heated by the air that absorbs heat from the inside of the housing 10.

In addition, the water electrolysis device 1 includes the ventilation fan 17 that sends air in the housing 10 to the exhaust port 15. Further, the air intake port 13 is disposed in a lower portion of the housing 10, and the exhaust port 15 is disposed in an upper portion of the housing 10. The temperature increasing portion 18 is disposed in the housing 10 to face the air inlet port of the ventilation fan 17. Accordingly, it is possible to efficiently collect the air that absorbs heat from the inside of the housing 10 to the temperature increasing portion 18, and satisfactorily heat the fuel electrode off gas (generated hydrogen) supplied from the condenser 6 to the hydrogen blowers 7, 8 and the like.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Industrial Applicability

The embodiment of the present disclosure can be used in a manufacturing industry or the like of a water electrolysis device.

## Claims

1. A water electrolysis device (1) including a water electrolysis module (2) that generates hydrogen by water vapor electrolysis, the water electrolysis device comprising:
a blower (7, 8) configured to supply hydrogen to the water electrolysis module;
a recycle passage configured to supply generated hydrogen generated by the water electrolysis module (2) from the water electrolysis module to an intake port of the blower (7, 8);
a condenser (6) configured to condense water vapor contained in the generated hydrogen; and
a temperature increasing portion (18) configured to increase a temperature of the generated hydrogen between the condenser (6) and the blower (7, 8).

2. The water electrolysis device (1) according to claim 1, further comprising:
a housing (10) configured to accommodate the water electrolysis module (2), the blower (7, 8), the recycle passage, and the condenser (6), wherein
the temperature increasing portion (18) is formed by a part of the recycle passage disposed in a region in the housing (10), the region having a temperature higher than a dew-point temperature of the generated hydrogen at an outlet of the condenser (6).

3. The water electrolysis device (1) according to claim 2, wherein
the housing (10) includes an air intake port (13) for taking in air to the inside and an exhaust port (15) for discharging the air from the inside to the outside, and
the temperature increasing portion (18) is disposed inside the housing (10) to be closer to the exhaust port (15) than the air intake port (13).

4. The water electrolysis device (1) according to claim 3, further comprising:
a ventilation fan (17) configured to send the air in the housing (10) to the exhaust port (15), wherein
the air intake port (13) is disposed in a lower portion of the housing (10),
the exhaust port (15) is disposed in an upper portion of the housing (10), and
the temperature increasing portion (18) is disposed in the housing (10) to face an air inlet port of the ventilation fan (17).
